Europäisches Patentamt

European Patent Office

Office européen des brevets

(19)

(11) **EP 0 761 835 B1**

(12) **FASCICULE DE BREVET EUROPEEN**

(45) Date de publication et mention
de la délivrance du brevet:
**11.07.2001 Bulletin 2001/28**

(51) Int Cl.7: **C22C 38/06**, C22C 38/00,
C21C 7/10

(21) Numéro de dépôt: **96401655.4**

(22) Date de dépôt: **25.07.1996**

(54) **Procédé de fabrication d'une bande en acier pour emballage**

Verfahren zur Herstellung von Stahlstreifen für Verpackungszwecke

Process for manufacturing of steel strips for wrapping

(84) Etats contractants désignés:
**AT BE CH DE DK ES FI FR GB IT LI LU NL PT SE**

(30) Priorité: **06.09.1995 FR 9510417**

(43) Date de publication de la demande:
**12.03.1997 Bulletin 1997/11**

(73) Titulaire: **SOLLAC S.A.**
**92800 Puteaux (FR)**

(72) Inventeurs:
• **Ouvrard, Jacques**
**44100 Nantes (FR)**
• **Jouvenel, Jean-Claude**
**44160 Indre (FR)**

• **Jacques, Michel**
**44800 Saint Herblain (FR)**

(74) Mandataire: **Ventavoli, Roger**
**TECHMETAL PROMOTION (Groupe USINOR),**
**Immeuble " La Pacific "**
**11/13 Cours Valmy**
**La Défense 7,**
**TSA 10001**
**92070 Paris La Défense Cédex (FR)**

(56) Documents cités:
EP-A- 0 581 629          FR-A- 2 083 682
FR-A- 2 686 815          GB-A- 1 120 668

**Description**

La présente invention concerne une bande en acier pour emballage.

Le corps des boîtes en acier du type comprenant un corps roulé soudé et au moins un fond serti après bordage est fabriqué à partir de bandes en acier laminées à froid, recuites et revêtues d'étain ou de chrome.

Il existe deux techniques pour fabriquer ces bandes d'acier.

La première technique consiste à utiliser un acier contenant, en poids, 0,03% à 0,06% de carbone, 0,220% à 0,350% de manganèse, 0,003% à 0,007% d'azote, moins de 0,02% de phosphore, moins de 0,025% de soufre, moins de 0,080% de cuivre, le reste étant du fer et des impuretés résultant de l'élaboration, pour fabriquer une bande laminée à froid, à recuire en continu la bande laminée à froid puis à lui faire subir un écrouissage supérieur à 25%. On obtient ainsi des bandes dont la texture est équiaxe à grains fins, ce qui est favorable à une bonne résistance à la corrosion en milieu alimentaire, une résistance à la rupture supérieure à 600 MPa, ce qui permet d'alléger les emballages métalliques, mais une aptitude au formage faible, l'allongement à rupture est d'environ 1%. La faible aptitude au formage rend impossible le bordage par tamponnage, en particulier lorsque le diamètre de la boîte est inférieur à 100mm, le bordage doit alors être fait par roulage ou à la molette, ce qui est un inconvénient car de très nombreuses lignes de fabrication de boîtes ne sont pas équipées de machines de roulage.

La deuxième technique consiste à utiliser un acier contenant, en poids, 0,05% à 0,08% de carbone, 0,350% à 0,500% de manganèse, 0,003% à 0,007% d'azote, moins de 0,020% de phosphore, moins de 0,020% de soufre, moins de 0,080% de cuivre, le reste étant du fer et des impuretés résultant de l'élaboration, pour fabriquer une bande laminée à froid, à recuire en recuit base la bande laminée à froid puis à lui faire subir un écrouissage supérieur à 25%. On obtient ainsi une bande ayant une bonne aptitude au formage mais dont la résistance à la rupture est plus faible, inférieure à 550 MPa, et qui présente une texture marquée à grains relativement gros moins favorable à la résistance à la corrosion en milieu alimentaire.

Le but de la présente invention est de remédier à ces inconvénients en proposant un procédé pour la fabrication d'une bande en acier pour emballage combinant les avantages des bandes obtenues par recuit continu et des bandes obtenues par recuit base.

A cet effet, l'invention a pour objet un procédé de fabrication d'une bande en acier pour emballage selon lequel:

- on élabore un acier dont la composition chimique comprend, en poids:

$$0,05\% \leq C \leq 0,08\%$$

$$0,280\% \leq Mn \leq 0,350\%$$

$$0,010\% \leq N \leq 0,014\%$$

$$0,010\% \leq Al \leq 0,020\%$$

$$P \leq 0,020\%$$

$$S \leq 0,025\%$$

$$Cu \leq 0,09\%$$

le reste étant du fer et des impuretés résultant de l'élaboration, le reste étant du fer et des impuretés résultant de l'élaboration, et on fabrique une bande laminée à froid d'épaisseur inférieure à 0,5mm,
- on recuit en continu la bande laminée à froid entre 650°C et 700°C,
- on lamine la bande laminée à froid et recuite pour obtenir une réduction de son épaisseur de 8 à 15%.

La bande peut être revêtue par étamage ou par chromage.

L'invention concerne également une bande en acier pour emballage constituée d'un acier dont la composition chimique comprend, en poids:

$$0,05\% \leq C \leq 0,08\%$$

$$0,280\% \leq Mn \leq 0,350\%$$

$$0,010\% \leq N \leq 0,014\%$$

$$0,010\% \leq Al \leq 0,020\%$$

$$P \leq 0,020\%$$

$$S \leq 0,025\%$$

$$Cu \leq 0,09\%$$

le reste étant du fer et des impuretés résultant de l'élaboration, la texture de la bande en acier est équiaxe et comporte plus de 30000 grains par $mm^2$.

De préférence, la résistance à la traction de la bande est supérieure à 500 MPa et la bande peut être revêtue par étamage ou par chromage.

L'invention concerne, enfin, une boîte du type comportant un corps et au moins un fond serti par bordage dont le corps est fabriqué à partir d'une bande selon l'invention.

L'invention va maintenant être décrite plus en détail, mais de façon non limitative.

La bande selon l'invention est constituée d'un acier vieillissant à bas carbone dont la composition chimique comprend, en poids:

- de 0,05% à 0,08% de carbone afin d'obtenir une structure entièrement ferritique,
- de 0,280% à 0,350% de manganèse pour obtenir une dureté suffisante,
- de 0,010% à 0,014% d'azote pour obtenir un effet suffisant de vieillissement de la ferrite écrouie,
- de 0,010% à 0,020% d'aluminium de façon à désoxyder l'acier tout en laissant de l'azote libre ,
- moins de 0, 20% de phosphore, moins de 0,025% de soufre et moins de 0,09% de cuivre pour réduire les risques de corrosion,

le reste étant du fer et des impuretés résultant de l'élaboration.

On élabore cet acier, on le coule par exemple sous forme de brame et on le lamine à chaud pour obtenir une bande laminée à chaud d'épaisseur inférieure à 3 mm et de préférence égale à 2 mm environ. On peut également couler directement la bande par exemple avec une machine de coulée entre cylindres ou par tout autre procédé.

De façon connue, on décape la bande et on la lamine à froid pour obtenir une bande laminée à froid d'épaisseur inférieure à 0,5 mm, et, de préférence, d'épaisseur d'environ 0,2 mm.

On recuit la bande à une température comprise entre 650°C et 700°C par passage dans un four de recuit continu, puis on écrouit la bande en effectuant une réduction d'épaisseur de 5 à 20% et de préférence de 8 à 15% à l'aide d'un laminoir à froid ou d'un laminoir écrouisseur.

Les bandes ainsi obtenues ont une résistance à la traction supérieure à 500 MPa, un allongement à la rupture supérieur à 3% , une texture équiaxe à grains fins; le nombre de grains par $mm^2$ mesuré selon la norme NF A 04 102 est supérieur à 30000.

En choisissant convenablement la réduction d'épaisseur après recuit, l'Homme du Métier peut ajuster la résistance à la traction et, ainsi, fabriquer une bande dont la résistance à la traction est, par exemple, d'environ 550 MPa ou d'environ 620 MPa.

A titre d'exemple, avec l'acier A selon l'invention, et avec les aciers B et C selon l'art antérieur et donnés à titre de comparaison, on a fabriqué des bandes d'épaisseur 0,2 mm.

Les compositions chimiaues des aciers étaient en% on poids

|   | C | Mn | N | AL | P | S | Cu |
|---|---|----|---|----|---|---|-----|
| A | 0,06 | 0,310 | 0,012 | 0,015 | 0,018 | 0,022 | 0,090 |
| B | 0,07 | 0,450 | 0,006 | 0,055 | 0,017 | 0,015 | 0,060 |
| C | 0,045 | 0,320 | 0,005 | 0,045 | 0,019 | 0,021 | 0,065 |

Les procédés de fabrication et les propriétés des bandes étaient:

|   | Recuit | réduction | Rm (MPa) | A% | texture | résistance à la corrosion |
|---|--------|-----------|----------|----|---------|---------------------------|
| A | continu | 9% | 550 | 6 | équiaxe | bonne |
| A | continu | 14% | 620 | 4 | équiaxe | bonne |
| B | continu | 28 | 620 | 0,1 | équiaxe | bonne |
| C | base | 40 | 540 | 4 | pan cake | acceptable |

Ces résultats montrent que les bandes selon l'invention permettent d'obtenir à la fois la même résistance à la traction et à la corrosion qu'avec des bandes recuites en continu selon l'art antérieur, et le même allongement, c'est à dire la même aptitude au formage, qu'avec des bandes recuites en recuit base.

Les bandes ainsi obtenues peuvent être revêtues, de façon connue, par étamage ou par chromage et, éventuellement, être vernies, avant d'être utilisées pour fabriquer des boîtes.

Avec les bandes selon l'invention on a fabriqué des corps de boîtes par roulage et soudage électrique. Les corps de boîte ont été bordés par tamponnage avant sertissage des fonds, sans que le tamponnage produise de fissures dans les bords.

L'utilisation des bandes selon l'invention ne se limite pas à la fabrication des boîtes roulées, soudées électriquement et bordées par tamponnage avant sertissage des fonds, mais concerne également la fabrication de fonds de boîtes à haute performance.

## Revendications

**1.** Procédé de fabrication d'une bande en acier pour emballage caractérisée en ce que:

- on élabore un acier dont la composition chimique comprend, en poids:

$$0,05\% < C < 0,08\%$$

$$0,280\% \leq Mn \leq 0,350\%$$

$$0,010\% \leq N \leq 0,014\%$$

$$0,010\% \leq Al \leq 0,020\%$$

$$P < 0,020\%$$

$$S < 0,025\%$$

$$Cu \leq 0,09\%$$

le reste étant du fer et des impuretés résultant de l'élaboration, et on fabrique une bande laminée à froid d'épaisseur inférieure à 0,5mm,

- on recuit en continu la bande laminée à froid entre 650°C et 700°C,
- on lamine la bande laminée à froid et recuite pour obtenir une réduction de son épaisseur de 8 à 15%.

**2.** Procédé selon la revendication 1 caractérisée en ce que, en outre, on revêt la bande par étamage ou par chromage.

**3.** Bande en acier pour emballage caractérisée en ce qu'elle est constituée d'un acier dont la composition chimique comprend, en poids:

$$0,05\% \leq C < 0,08\%$$

$$0,280\% \leq Mn \leq 0,350\%$$

$$0,010\% \leq N \leq 0,014\%$$

$$0,010\% \leq Al < 0,020\%$$

$$P < 0,020\%$$

$$S < 0,025\%$$

$$Cu \leq 0,09\%$$

le reste étant du fer et des impuretés résultant de l'élaboration, et en ce que sa texture est équiaxe et qu'elle comporte plus de 30000 grains par $mm^2$ selon la norme AFNOR 04102.

**4.** Bande en acier pour emballage selon la revendication 3 caractérisée en ce que sa résistance à la traction est supérieure à 500 MPa.

**5.** Bande selon la revendication 3 ou la revendication 4 caractérisée en ce qu'elle est revêtue par étamage ou par chromage.

**6.** Boîte du type comportant un corps et au moins un fond serti par bordage caractérisée en ce que le corps est fabriqué à partir d'une bande selon l'une quelconque des revendications 3 à 5.


**Patentansprüche**

**1.** Verfahren zur Herstellung eines Stahlbandes für Verpackungen, dadurch gekennzeichnet, dass

- man einen Stahl erschmilzt, dessen chemische Zusammensetzung die folgende ist:

$$0,05\ \% \leq C \leq 0,08\ \%$$

$$0,280\ \% \leq Mn \leq 0,350\ \%$$

$$0,010\ \% \leq N \leq 0,014\ \%$$

$$0,010 \% \leq Al \leq 0,020 \%$$

$$P \leq 0,020 \%$$

$$S \leq 0,025 \%$$

$$Cu \leq 0,09 \%$$

wobei der Rest aus Eisen und Verunreinigungen aus der Erschmelzung besteht, und man stellt ein kaltgewalztes Band mit einer Stärke unter 0,5 mm her,

- man glüht im Durchlauf das kaltgewalzte Band zwischen 650 °C und 700 °C,
- man walzt das kaltgewalzte und geglühte Band, um eine Abnahme seiner Stärke um 8 bis 15 % zu erreichen.

2. Verfahren nach Anspruch 1, dadurch gekennzeichnet, dass man außerdem das Band durch Verzinnen oder Verchromen mit einem Überzug versieht.

3. Stahlband für Verpackungen, dadurch gekennzeichnet, dass es aus einem Stahl mit der folgenden chemischen Zusammensetzung in Gewichtsprozent besteht:

$$0,05 \% \leq C < 0,08 \%$$

$$0,280 \% \leq Mn < 0,350 \%$$

$$0,010 \% \leq N \leq 0,014 \%$$

$$0,010 \% \leq Al \leq 0,020 \%$$

$$P < 0,020 \%$$

$$S \leq 0,025 \%$$

$$Cu \leq 0,09 \%$$

wobei der Rest aus Eisen und Verunreinigungen aus der Erschmelzung besteht, und dadurch, dass seine Textur gleichgerichtet ist und nach der Norm AFNOR 04 102 mehr als 30000 Körner pro mm$^2$ aufweist.

4. Stahlband für Verpackungen nach Anspruch 3, dadurch gekennzeichnet, dass seine Zugfestigkeit größer als 500 MPa ist.

5. Band nach Anspruch 3 oder Anspruch 4, dadurch gekennzeichnet, dass es durch Verzinnen oder Verchromen einen Überzug erhält.

6. Behältnis des Typ, der aus einem Behälterkörper und mindestens einem durch Bördelung eingebrachten Boden besteht, dadurch gekennzeichnet, dass der Behälterkörper aus einem Band nach einem der Ansprüche 3 bis 5 gefertigt ist.

**Claims**

1.  Process for manufacturing a packaging steel strip, characterized in that:

    -   a steel having the following chemical composition by weight is smelted:

    $0.05\% \leq C < 0.08\%$

    $0.280\% \leq Mn \leq 0.350\%$

    $0.010\% \leq N \leq 0.014\%$

    $0.010\% \leq Al \leq 0.020\%$

    $P \leq 0.020\%$

    $S \leq 0.025\%$

    $Cu \leq 0.09\%$

    the balance being iron and impurities resulting from the smelting, and a cold-rolled strip with a thickness of less than 0.5 mm is manufactured;
    -   the cold-rolled strip is continuously annealed between 650°C and 700°C; and
    -   the cold-rolled strip is rolled and annealed, in order to reduce its thickness by 8 to 15%.

2.  Process according to Claim 1, characterized in that, in addition, the strip is coated by tin plating or by chromium plating.

3.  Packaging steel strip, characterized in that it is made of a steel whose chemical composition comprises, by weight:

    $0.05\% \leq C \leq 0.08\%$

    $0.280\% \leq Mn \leq 0.350\%$

    $0.010\% \leq N < 0.014\%$

    $0.010\% \leq Al \leq 0.020\%$

    $P \leq 0.020\%$

    $S < 0.025\%$

    $Cu \leq 0.09\%$

the balance being iron and impurities resulting from the smelting, and in that its texture is equiaxed and it contains more than 30 000 grains per $mm^2$ according to the AFNOR 04102 standard.

4. Packaging steel strip according to Claim 3, characterized in that its tensile strength is greater than 500 MPa.

5. Strip according to Claim 3 or Claim 4, characterized in that it is coated by tin plating or by chromium plating.

6. Can of the type having a body and at least one bottom crimped by flanging, characterized in that the body is manufactured from a strip according to any one of Claims 3 to 5.